# EUROPEAN PATENT APPLICATION

(11) **EP 1 113 549 A1**
(43) Date of publication of application: **04.07.2001**
(21) Application number: 99204603.7
(22) Date of filing: 30.12.1999
(51) Int. Cl.: H02B 5/00, H01H 9/00, H01F 29/04

(54) **Electric substation**

(71) Applicant: ABB T&D Technologies Ltd., 8059 Zürich (CH)
(72) Inventor: Elli, Enrico, 20050 Verano Brianza, Milano (IT); Sciacca, Aldo, 20097 S. Donato Milanese, Milano (IT); Volponi, Silvia, 20033 Desio, Milano (IT)
(74) Representative: Giavarini, Francesco

(57) **Abstract**

An electric transmission and/or distribution substation connected to a multi-phase power line, comprising:
- a transformer having a tank which contains a magnetic core, electric windings and a first dielectric fluid:
- an on-load tap changer which comprises a selector and a switch, the switch having at least a first moving contact and corresponding first fixed contacts;
- a circuit breaker comprising a casing which contains a second moving contact and a second fixed contact which can couple/uncouple to each other and are electrically connected to the transformer and to the power line, the circuit breaker being positioned inside the tank, and first actuation means which are operatively connected to the second moving contact.

## Description

The present invention relates to an electric transmission and/or distribution substation.

In particular, the substation according to the invention, thanks to the structure of some of its components, allows to reduce the land occupation and the visual impact with respect to conventional substations, with a solution which is unique in its simplicity and effectiveness both from the point of view of production costs and of practical applications.

It is known that conventional substations use one or more power and/or distribution transformers, which are electrically connected, on one side, to the phases of a high-voltage power line, and on the other side, to a plurality of medium- and low voltage equipment.

In particular, each transformer comprises a tank which contains a magnetic core, electric windings, and an insulating fluid; further, each transformer is equipped with a plurality of bushings which allow electrical connections with the phase conductors and with the medium-and low voltage equipment.

An on-load tap changer, which comprises a selector and a diverter switch, is operatively connected to the transformer; the on-load tap changer, which can be positioned inside or outside the tank, is suitable to vary the transformation ratio of the transformer so that the voltage supplied to the medium-and low voltage equipment can be appropriately regulated.

The electrical connection between transformers and phase conductors is realized by the interposition of a plurality of switchgear elements, such as circuit breakers and disconnectors, which allow the realization of different electrical schemes according to the applications, and ensure the correct functioning of the substation.

At the present state of the art, the connections between transformers and switchgear elements are realized according to two main configurations, which have some drawbacks and disadvantages.

In particular, according to a first solution, the switchgear elements are disposed on the substation yard and are connected to the bushings of the transformer by means of conductor systems, such as busbars. In this case, the presence of conductors, which are positioned in air, causes a significant increase of the overall dimension of the substation, thus negatively increasing the land occupation and the visual impact; furthermore, the presence of busbars in air makes it necessary the use of busbars protections, for example against lightnings, and frequent maintenance interventions.

In a second solution, known in the art as "GIS" ("Gas Insulated Substation"), the switchgear elements are positioned inside a metal-clad casing which is filled with a pressurized dielectric gas, generally sulfur exafluoride (SF₆); further, also the conductors which connect the switchgear elements and the bushings of the transformer are housed, at least partially, in gas insulated ducts.

Although this solution is constructively compact and functionally effective, it needs a significant amount of SF₆, in order to provide the required insulation; this kind of gases, besides requiring a particular structure, which is extremely expensive and therefore effects the costs of the substation, have a negative environmental impact. As a matter of fact, it is necessary to adopt particular safety systems in order to avoid and/or indicate any losses and leaks of the gas; in this cases, losses and consequent leaks of the gas might in fact cause malfunctions of the substation and environmental contamination problems; moreover, frequent maintenance interventions are also required.

This obviously has a negative impact on the constructive complexity of the substation and on its overall reliability; furthermore, with this solution the substation has a structure which is not easily transportable and requires significant installation time, which can not be prefabricated and, once installed, can not be relocated.

The aim of the present invention is to realize an electric transmission and/or distribution substation which allows to reduce its overall dimension, when compared to conventional substations, thus allowing to reduce the land occupation and the visual impact.

Within the scope of this aim, an object of the present invention is to realize an electric transmission and/or distribution substation whose structure, at least partially, can be easily transported on the installation site, and, once installed, can be easily relocated.

A further object of the present invention is to realize an electric transmission and/or distribution substation which allows to reduce the installation time.

A further object of the present invention is to realize an electric transmission and/or distribution substation which allows to reduce maintenance interventions and use of protection systems.

A further object of the present invention is to realize an electric transmission and/or distribution substation which is highly reliable, relatively easy to manufacture and at low costs.

This aim, these objects and others which will become apparent hereinafter are achieved by an electric transmission and/or distribution substation connected to a multi-phase power line, characterized in that it comprises:
- a transformer having a tank which contains a magnetic core, electric windings and a first dielectric fluid;
- an on-load tap changer which comprises a selector and a switch, said switch having at least a first moving contact and corresponding first fixed contacts;
- a circuit breaker comprising a casing which contains a second moving contact and a second fixed contact which can couple/uncouple to each other and are electrically connected to the transformer and to the power line, said circuit breaker being positioned inside the tank; and
- first actuation means which are operatively connected to said second moving contact.

In this way, the overall dimension of the substation according to the invention are considerably reduced, with respect to the present state of the art; accordingly, the visual impact and the land occupation are decreased. Moreover, the module transformer- circuit breaker forms a unique component which can be easily prefabricated, transported, and, if necessary, relocated from one installation site to another.

Further characteristics and advantages of the invention will become apparent from the description of preferred embodiments of the electric substation according to the invention, illustrated only by way of non-limitative example in the accompanying drawings, wherein:
Figure 1 is an eiectricai scheme illustrating the transformer bay of the electric transmission and/or distribution substation, according to the invention;
Figure 2 is a schematic view of a high voltage circuit breaker used in the electric substation according to the invention.

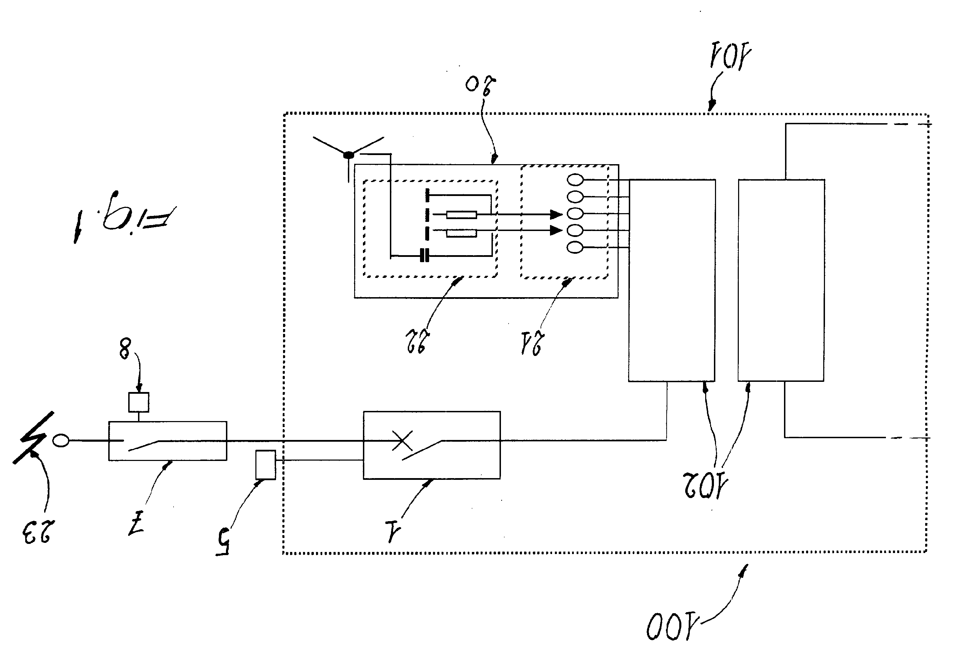

With reference to figure 1, the electric substation according to the invention comprises a power and/or distribution transformer, designated by the reference numeral 100. The transformer 100 has a tank 101 which contains a first dielectric fluid having mainly an insulation function, a magnetic core, which is not shown in the figure, and electric windings 102.

An on-load tap changer 20, which comprise a selector 21 and a diverter switch 22, is operatively connected to the windings 102 in order to vary the transformation ratio, so that the voltage supplied by the transformer can be adjusted according to the requirements of the service.

The functioning of the transformer 100 and of the on-load tap changer 20, as well as their connections, are well known in the art and therefore they will not be further described.

According to applications and/or specific needs, the on-load tap changer 20 can be positioned inside the tank 101, or outside; in this case, the connection between the selector 21 and the windings 102 can be realized by means of a mechanical system, according to a solution well known in the art. Alternatively, only the diverter switch 22 can be positioned outside the tank 101 and it can be connected to the selector 21 by means of a suitably shaped kinematic chain.

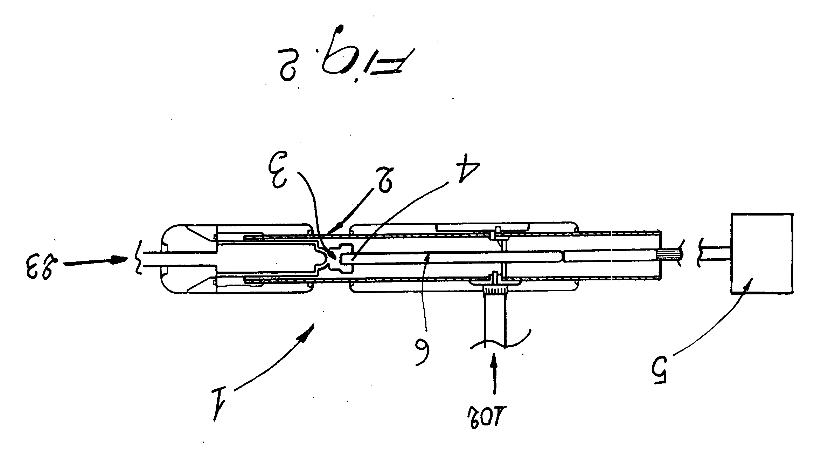

Advantageously, the electric substation according to the invention comprises a high voltage circuit breaker, designated by the reference numeral I in figures 1 and 2, which is directly positioned inside the tank 101. In this way, the overall dimension of the transformer bay in particular, and of the substation in general, are drastically reduced, with a very simple and effective solution. In fact, the bushings of the transformer 100, along the power line side, and the busbars which connect electrically the transformer itself and the interruption elements, are completely eliminated, thus reducing the number of components in air, the maintenance interventions required, and consequently increasing the overall reliability of the substation. Further, the transformer 100 and the circuit breaker 1 form a module which can be easily transported and relocated.

In particular, as shown in figure 2, the circuit breaker 1 has a casing 2 which is hermetically sealed and contains a fixed contact 3 and a moving contact 4 which can couple/uncouple to each other and are electrically connected to the windings 102 and to a multi-phase power line, schematically indicated in figure 1 by the reference numeral 23. For the sake of simplicity, in the description particular reference is made to a single phase of the power line 23; clearly, for each phase of the line 23, a circuit breaker 1 can be used.

Furthermore, with reference to a top view, the tank 101 has a substantially rectangular shape and the circuit breaker I can be positioned, along one of the long sides of said rectangular section, according to a solution which is particularly advantageous from the point of view of the electrical connections between the windings and the circuit breaker. Alternatively, the circuit breaker 1 can be placed along one of the short sides of said rectangular section, with a solution which is advantageous from the point of view of the cooling system of the transformer.

First actuation means 5, preferably positioned outside the tank 101, are operatively connected to the moving contact 4, in order to provide coupling/uncoupling of the contacts 3 and 4.

Advantageously, in the substation according to the invention, the moving contact of the diverter switch 22 can be operatively connected to and actuated by the first actuation means 5, through a suitably shaped kinematic chain, according to a solution extremely effective and cheap at the same time.

In particular, the moving contact and the corresponding fixed contacts of the diverter switch 22 can be directly positioned inside the casing 2 of the circuit breaker 1. For example, the fixed contacts can be positioned on the internal surface of the casing 1, and the moving contact can be positioned on an actuation rod 6, which interconnects the contact 4 and the actuation means 5. In this case, the first actuation means 5 are arranged so as to determine a coupled movement of the actuation rod 6, i.e. a translation of the rod 6 for coupling/uncoupling the contacts 3 and 4 of the circuit breaker, and a rotation of the rod 6 for coupling the moving contact of the diverter switch 22 with the corresponding fixed contacts.

Alternatively, third actuation means, operatively connected to the moving contact of the diverter switch, can be provided.

The circuit breaker I can be constituted by a vacuum circuit breaker, or in a preferred embodiment, a second dielectric fluid, which has mainly an insulating function, can be provided inside the casing 1.

In this case, in a very simple and flexible manner, the first dielectric fluid contained in the tank 101, and the second dielectric fluid provided in the casing 2, can be identical or different to each other, according to the applications and/or to specific needs.

In case of identical fluids, said first dielectric fluid and/or said second dielectric fluid can be constituted by non-flammable fluids, in particular by a dielectric fluorinated fluid, such as sulfur hexafluoride (SF₆).

Alternatively, the dielectric fluorinated fluid can be chosen among the group constituted by perfluorocarbons, or fluorocarbons or perfluoropolyethers; in particular, the use of perfluoropolyethers allows to increase safety and non-flammability of the transformer bay, and to reduce the environmental impact.

In case of different fluids, the first dielectric fluid can comprise a mineral oil, or a vegetal oil, or a perfluoropolyether, and the second dielectric fluid can comprise a mixture of sulfur hexafluoride and nitrogen, or pure nitrogen gas; clearly, other combinations can be adopted.

As schematically shown in figure 1, the electric substation according to the invention comprises at least one disconnector 7 which is electrically interposed between the circuit breaker 1 and the power line 23, and has a fixed contact and a corresponding moving contact, according to solution well known in the art; second actuation means 8 are operatively connected to the moving contact of the disconnector in order to provide its coupling/uncoupling with the corresponding fixed contact. In particular, the disconnector 7 can be positioned inside the tank 101, or outside, according to the applications and/or to specific needs. In particular, if the disconnector is positioned in the tank 101, a single casing can be used for housing the disconnector 7 and the circuit breaker 1.

According to an alternative embodiment, the moving contact of the diverter switch can be operatively connected to and actuated by the second actuation means 8, instead of by the first actuation means 5.

Further, the first actuation means 5 and/or the second actuation means 8 can comprise a motor with position control; in particular, the use of a servomotor entails considerable advantages in terms of precision and speed of execution of the operations.

As an alternative, it is possible to use mechanical, or electromechanical, or pneumatic, or hydraulic actuation means.

Considering the various phases of the power line 23, the first actuation means 5 can comprise a single motor with position control, operatively connected to the moving contact 4 of each circuit breaker 1, according to a solution which is cheap and effective at the same time. Alternatively, the first actuation means 5 can comprise, for each phase, a motor with position control, operatively connected to the moving contact 4 of the corresponding circuit breaker 1. In an equivalent manner, also the second actuation means 8 can comprise a unique motor with position control, operatively connected to the moving contact of each disconnector 6, or, for each phase, a motor with position control, operatively connected to the moving contact of the corresponding disconnector 6.

In practice it has been found that the electric substation according to the invention allows to achieve the intended aim and objects, since it has a structure which allows to reduce the land occupation and the visual impact, that can be prefabricated, easily transported and even relocated.

The electric substation thus conceived is susceptible of numerous modifications and variations, all of which are within the scope of the inventive concept; for example, other components, such as measuring transformers and/or various kind of protections, can be positioned inside the casing 2. All the details may also be replaced with other technically equivalent elements.

In practice, the materials employed, so long as they are compatible with the specific use, as well as the dimensions, may be any according to the requirements and to the state of the art.

## Claims

1. An electric transmission and/or distribution substation connected to a multi-phase power line, characterized in that it comprises:
- a transformer having a tank which contains a magnetic core, electric windings and a first dielectric fluid;
- an on-load tap changer which comprises a selector and a switch, said switch having at least a first moving contact and corresponding first fixed contacts;
- a circuit breaker comprising a casing which contains a second moving contact and a second fixed contact which can couple/uncouple to each other and are electrically connected to the transformer and to the power line, said circuit breaker being positioned inside the tank; and
- first actuation means which are operatively connected to said second moving contact.

2. An electric transmission and/or distribution substation according to claim 1 characterized in that said casing is hermetically sealed.

3. An electrical substation according to claim 1 characterized in that said interruption chamber contains a second dielectric fluid which is substantially identical to said first dielectric fluid.

4. An electric transmission and/or distribution substation according to claim 1 characterized in that said casing contains a second dielectric fluid which is different from said first dielectric fluid.

5. An electric transmission and/or distribution substation according to claim 4 characterized in that said first dielectric fluid comprises a mineral oil, or a vegetal oil.

6. An electric transmission and/or distribution substation according to one or more of the claims 1 to 4 characterized in that said first dielectric fluid and/or said second dielectric fluid are non-flammable fluids.

7. An electric transmission and/or distribution substation according to claim 6 characterized in that said first dielectric fluid and/or said second dielectric fluid comprise a dielectric fluorinated fluid.

8. An electrical substation according to claim 7, characterized in that said dielectric fluorinated fluid is sulfur hexafluoride.

9. An electric transmission and/or distribution substation according to claim 7, characterized in that said dieieciric fluorinated fluid is chosen among the group constituted by perfluorocarbons, or fluorocarbons or perfluoropolyethers.

10. An electric transmission and/or distribution substation according to claim 4, characterized in that said second dielectric fluid comprises a mixture of sulfur hexafluoride and nitrogen.

11. An electric transmission and/or distribution substation according to claim 4, characterized in that said second dielectric fluid comprises pure nitrogen gas.

12. An electric transmission and/or distribution substation according to one or more of the preceding claims characterized in that it comprises at least one disconnector positioned inside the tank and interposed between the circuit breaker and the power line, said disconnector having at least a third fixed contact and a third moving contact which can couple/uncouple to each other, and second actuation means which are operatively connected to said third moving contact.

13. An electric transmission and/or distribution substation according to one or more of the claims 1 to 11 characterized in that it comprises at least one disconnector positioned outside the tank and interposed between the circuit breaker and the power line, said disconnector having at least a third fixed contact and a third moving contact which can couple/uncouple to each other, and second actuation means which are operatively connected to said third moving contact.

14. An electric transmission and/or distribution substation according to one or more of the preceding claims characterized in that said first moving contact is operatively connected to and actuated by said first actuation means.

15. An electric transmission and/or distribution substation according to one or more of the preceding claims characterized in that said first moving contact and said corresponding first fixed contacts are positioned inside said casing.

16. An electric transmission and/or distribution substation according to one or more of the claims 1 to 13 characterized in that said first moving contact is operatively connected to and actuated by said second actuation means.

17. An electric transmission and/or distribution substation according to claims 1 to 13 characterized in that it comprises third actuation means operatively connected to said first moving contact.

18. An electric transmission and/or distribution substation according to one or more of the preceding claims characterized in that said first actuation means and/or said second actuation means comprise a motor with position control.

19. An electric transmission and/or distribution substation according to claim 1 characterized in that said circuit breaker is a vacuum circuit breaker.
